# EUROPEAN PATENT SPECIFICATION

(11) **EP 0 744 598 B1**
(45) Date of publication and mention of the grant of the patent: **14.11.2001**
(21) Application number: 96201455.1
(22) Date of filing: 23.05.1996
(51) Int. Cl.: G01G 21/18, G01G 21/23

(54) **Weighing apparatus**
Wägeeinrichtung
Appareil de pesée

(30) Priority: 24.05.1995 NL 1000432
(43) Date of publication of application: 27.11.1996
(73) Proprietor: Welvaarts, Petrus Wilhelmus Maria, 5275 JG Den Dungen (NL)
(72) Inventor: Welvaarts, Petrus Wilhelmus Maria, 5275 JG Den Dungen (NL)
(74) Representative: Vollebregt, Cornelis Jacobus, Ir.

(56) References cited:
- EP-A- 0 065 176
- EP-A- 0 177 891
- EP-A- 0 476 778
- PATENT ABSTRACTS OF JAPAN vol. 6, no. 166 (P-138) [1044] , 31 August 1982 & JP-A-57 082719 (KUBOTA TEKKO K.K.), 24 May 1982,

## Description

The invention relates to a weighing device for weighing loads, whereby the weighing device comprises at least one pressure force indicator, which is connected to a frame, and an auxiliary frame, on which the load to be weighed is placed, whereby a pressure force-transmitting means for transmitting forces in a substantially vertical direction is provided between said pressure force indicator and said auxiliary frame, which pressure force-transmitting means is confined between two supporting surfaces, one being connected to said pressure force indicator and the other being connected to said auxiliary frame, whereby the parts of the weighing device supporting the supporting surfaces are interconnected by a connecting piece consisting of a resilient material.

Weighing devices of this type have been used for many years already and generally function satisfactorily when the load to be weighed is applied exactly vertically through the centre of the pressure force-transmitting means.

In case of deviations from this position, which frequently occur, in particular with mobile installations, for example weighing devices coupled to vehicles, undesirable movements appear to occur between the frame supporting the pressure force indicator and the auxiliary frame supporting the load, which adversely affects the measuring result, so that it cannot be ensured that the weight is determined correctly.

The invention is characterised in that for transmitting forces from the auxiliary frame to the pressure force indicator at least part of said connecting piece extending in a substantially vertical direction is confined between a rigid element connected to said pressure force-indicator and a rigid element connected to said auxiliary frame, such that any forces applied in a direction deviating from the vertically downward direction will be transmitted to the pressure force indicator via the confined resilient connecting piece.

In practice it has become apparent that undesirable movements between the frame supporting the pressure force indicator and the auxiliary frame supporting the load can be prevented by using the construction according to the invention, whereby forces exerted in a direction deviating from the vertical can be transmitted via the resilient material. All this is conductive to a greater weighing accuracy.

Another advantage of using the resilient material with mobile installations is the fact that a resilient support of the auxiliary frame with respect to the frame supporting the pressure force indicator is obtained during transport of the weighing device.

It is noted that from EP-A-0065176 a weighing device is known, wherein balls transmitting the weighing forces are disposed between two frame parts. In order to prevent said balls from falling out rubber sleeves surrounding the balls are provided, which are fixed to the one frame part with one end and to the other frame part with the other end. In contrast to the construction according to the invention this known construction aims at a certain freedom of movement in horizontal direction of the two frame parts, whilst bolts are secured to the one frame part in order to limit said movement, said bolts being guided with some play in holes formed in the other frame part. This device will only be suitable for stationary weighing devices, which are loaded in purely vertical direction by the load to be weighed.

The invention will be explained in more detail hereafter with reference to a few possible embodiments of the construction according to the invention diagrammatically illustrated in the accompanying Figures.

Figure 1 diagrammatically shows a first embodiment of the construction according to the invention, partly in side view and partly in sectional view.

Figure 2 diagrammatically shows a second embodiment of the construction according to the invention, partly in sectional view and partly in side view.

Figure 3 diagrammatically shows a third embodiment of the construction according to the invention, partly in sectional view and partly in side view.

Figure 4 is a plan view of Figure 3.

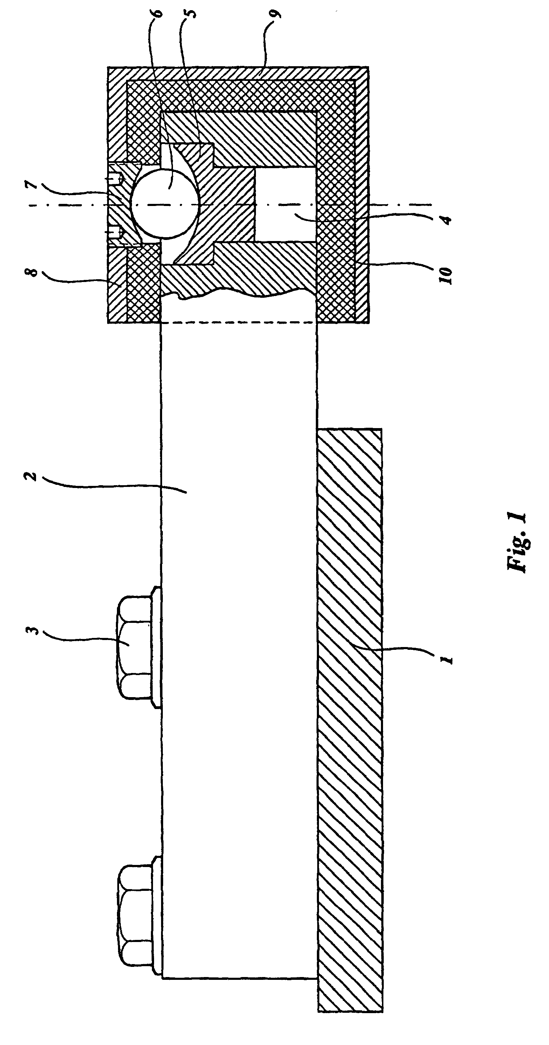

Figure 1 diagrammatically shows a frame 1, which may for example form part of a stationary weighing device or of a vehicle.

A pressure force indicator 2, also called load cell, which is known per se, is mounted on said frame 1 by means of bolts 3. Such a pressure force indicator or load cell is usually provided with strain gauges, which are deformed when the pressure force indicator is loaded and which thereby provide an indication as to the load applied to the pressure force indicator.

A stepped bore 4 is formed in a free end of the pressure force indicator, in which bore a dish-shaped means 5 is disposed. A ball 6 is supported on said dish-shaped means 5. Said ball 6 is confined between a supporting surface of dish-shaped means 5 and a supporting surface of another dish-shaped means 7 being supported on said ball. Said dish-shaped means 7 is screwed into a threaded bore which is formed in a sleeve-shaped means 8 surrounding the end of the pressure force indicator, said sleeve-shaped means at one end being closed by a vertical wall 9. The inner circumference of sleeve-shaped means 8 and the side of wall 9 facing the inside of sleeve-shaped means 8 are spaced from the outer circumference of the end of pressure force indicator 2, and the space thus formed is filled by a connecting piece 10 consisting of a resilient material, for example rubber or plastic material, which is confined between the horizontal and vertical boundary surfaces of sleeve-shaped means 8 and pressure force indicator 2.

Sleeve-shaped means 8 and wall 9 form part of an auxiliary frame, on which a load to be weighed may be placed. The construction may thereby be such, that the load to be weighed is weighed by the single pressure force indicator shown in Figure 1, or that more than one pressure force indicator 2 is connected in the manner described above to the auxiliary frame supporting the load.

It will be apparent that when the construction according to the invention is used, at least the larger part of the load to be weighed, which is applied in vertical direction, will be transmitted to pressure force indicator 2 via dish 7, ball 6 forming the pressure-force transmitting means, and dish 5. Any forces applied in a direction deviating from the vertically downward direction will be transmitted to the pressure force indicator via the confined resilient connecting piece 10, whereby said connecting piece will also prevent undesirably large movements of "auxiliary frame" 8, 9 with respect to pressure force indicator 2 and/or to frame 1, with which pressure force indicator 2 is connected.

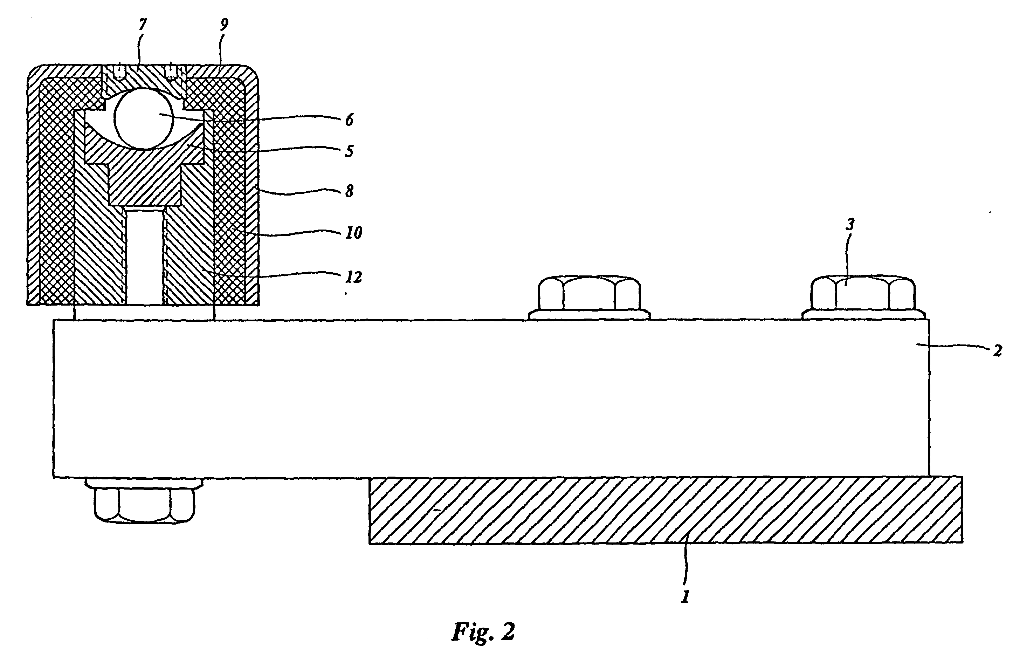

Figure 2 shows another embodiment of the construction according to the invention, wherein those parts that correspond with the parts discussed above with reference to Figure 1 are indicated by the same numerals as used in Figure 1.

With the construction shown in Figure 2 a bush 12 is mounted on top of pressure force indicator by means of a bolt 11. A dish 5 is housed within a stepped bore formed in bush 12. Said dish 5 in turn supports a pressure force-transmitting ball 6, which is confined between dish 5 and a dish 7 positioned above ball 6. Dish 7 is provided in a wall 9, which closes sleeve-shaped means 8 at one end. Again the space between the outer circumference of vertical bush 12 and the vertical wall of sleeve 8 extending concentrically about bush 12 as well as the space between the upper end of the bush 12 and the wall 9 are filled with the connecting piece 10, which consists of a resilient material such as rubber or the like.

It will be apparent that also with this construction sleeve 8 and the wall 9 closing sleeve 8 at one end will form part of an auxiliary frame, on which the load to be weighed may be placed. Otherwise the operation of this construction corresponds in principle with that of the construction described above with reference to Figure 1.

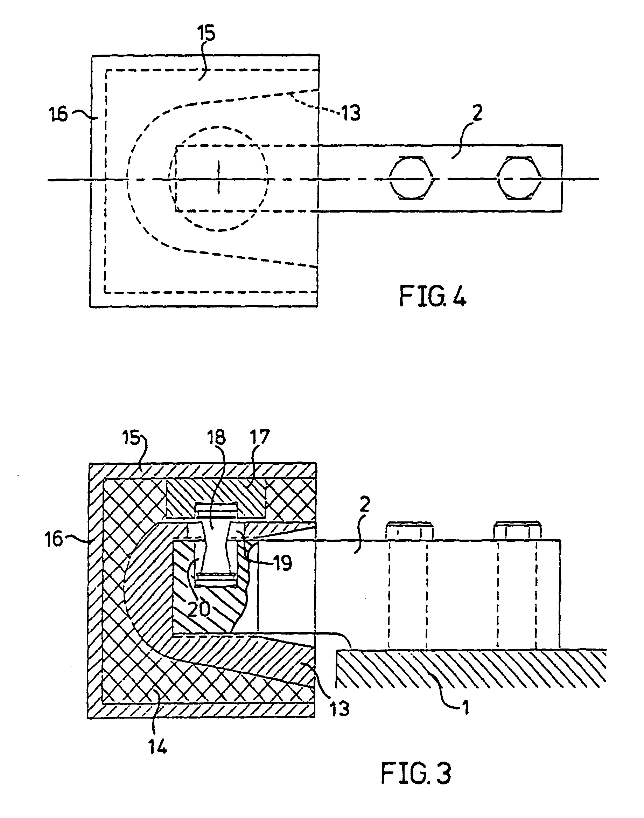

Also in the embodiment according to Figures 3 and 4 those parts that correspond with the parts discussed above with reference to the preceding embodiments are indicated by the same numerals as in the preceding Figures.

With the construction shown in Figures 3 and 4 an attachment of a hard material, such as metal, is slid over the end of pressure force indicator 2, which attachment has a horizontally extending surface at its upper side, but which otherwise tapers off slightly in the direction of a rounded end, which is located more or less in line with the pressure force indicator.

The attachment is surrounded by a connecting piece 14 consisting of a resilient material, for example rubber or plastic material, which is confined between the outer circumference of attachment 13 and the inner circumference of a sleeve-shaped means 15, which is closed at one end by a vertical wall 16. A dish 17 is secured to a part of sleeve-shaped means 15 extending above pressure force indicator 2, with the upper end of a pressure force-transmitting bar 18 being positioned against a supporting surface of said dish. Bar 18 extends through a hole 19 formed in attachment 13 into a hole 20 formed in the end of pressure force indicator 20. Said bar 18 is thereby with its bottom end supported on the bottom of blind hole 20, which forms a supporting surface.

Also with this construction the vertical forces will be transmitted via bar 18 and forces possibly deviating from the vertical can be transmitted via connecting piece 14 consisting of a resilient material, which is confined between rigid members.

## Claims

1. A weighing device for weighing loads, whereby the weighing device comprises at least one pressure force indicator (2), which is connected to a frame (1), and an auxiliary frame (8, 15), on which the load to be weighed is placed, whereby a pressure force-transmitting means (6, 18) for transmitting forces in a substantially vertical direction is provided between said pressure force indicator (2) and said auxiliary frame (8, 15), which pressure force-transmitting means is confined between two supporting surfaces (5, 7), one being connected to said pressure force indicator (2) and the other being connected to said auxiliary frame (8, 15), whereby the parts (8, 2) of the weighing device supporting said supporting surfaces are interconnected by a connecting piece (10, 14) consisting of a resilient material, **characterised in that** at least part of said connecting piece extending in a substantially vertical direction is confined between a rigid element (12, 13) connected to said pressure force indicator (2) and a rigid element (8) connected to said auxiliary frame, such that any forces applied in a direction deviating from the vertically downward direction will be transmitted to the pressure force indicator via the confined resilient connecting piece (10).

2. A weighing device according to claim 1, **characterized in that** one end of a pressure force indicator (2) is surrounded by a sleeve-shaped means (8, 15) surrounding said end in spaced-apart relationship, which sleeve-shaped means is at one end closed by a wall (9, 16), said wall being spaced from the end of the pressure force indicator (2) by some distance, whereby the space between the end of said pressure force indicator (2) and said sleeve-shaped means (8, 15) and the wall connected thereto houses said connecting piece (10, 14) consisting of a resilient material.

3. A weighing device according to claim 2, **characterized in that** an attachment is mounted on the end of said pressure force indicator (2), said attachment extending into said connecting piece (14) and tapering off in the direction of the wall closing said sleeve-shaped means (15).

4. A weighing device according to claim 1, **characterized in that** a bush (12) forming a part supporting a supporting surface (5) is mounted on top of one end of a pressure force indicator (2), said bush being surrounded in spaced-apart relationship by a sleeve-shaped means, said sleeve-shaped means at its upper end being closed by a wall (9) supporting a supporting surface (7), said wall being spaced from the upper end of said bush (12) by some distance, whereby the space between said bush (12), said sleeve-shaped means (8) and the wall (9) closing said sleeve-shaped means at one end is filled by said connecting piece (10) consisting of a resilient material, whereby at least one vertically extending part of said connecting piece (10) is confined between rigid members (9, 2; 8, 12; 13, 16), which are fixedly connected to said parts supporting said supporting surfaces.

## Patentansprüche

1. Eine Wägevorrichtung zum Wiegen von Ladung, wobei die Wägevorrichtung beinhaltet wenigstens einen Druck-Kraft-Anzeiger (2), welcher verbunden ist mit einem Rahmen (1) und einem Hilfsrahmen (8, 15), an welchem die zu wiegende Ladung platziert ist, wobei eine Druck-Kraft-Übertragungs-Einheit (6,18) zur Kraftübertragung im wesentlichen in vertikaler Richtung angeordnet ist, zwischen besagtem Druck-Kraft-Anzeiger (2) und besagtem Hilfsrahmen (8, 15), welche Druck-Kraft-Übertragungs-Einheit zwischen zwei Stützflächen (5, 7) eingeschlossen ist, wovon eine mit besagtem Druck-Kraft-Anzeiger (2) verbunden ist und die andere mit besagtem Hilfsrahmen (8, 15) verbunden ist, wobei die Teile (8, 2) der Wägevorrichtung, welche besagte Stützflächen stützen, durch ein Verbindungsstück (10, 14) verbunden sind, welches aus einem rückstellfähigen Material besteht, gekennzeichnet darin, dass wenigstens ein Teil von besagtem Verbindungsstück, welches sich in einer im wesentlichen vertikalen Richtung erstreckt, eingeschlossen ist zwischen einem starrem Element (12, 13), welches mit besagter Druck-Kraft-Anzeiger (2) verbunden ist, und einem starren Element (8), welches mit besagtem Hilfsrahmen verbunden ist, so dass jede in einer Richtung auftretende Kraft welche von der vertikalen, abwärts gerichteten Richtung abweicht, auf den Druck-Kraft-Anzeiger, mittels des gespannten, rückstellfähigen Verbindungsstückes (10), übertragen wird.

2. Wägevorrichtung nach Anspruch1, **dadurch gekennzeichnet, dass** ein Ende eines Druck-Kraft-Anzeigers (2) durch eine hülsenförmige Vorrichtung (8,15) umschlossen ist, besagtes Ende in von ihm beabstandeter Anordnung umschließend, welche hülsenförmige Vorrichtung an einem Ende durch eine Wand (9,16) geschlossen ist, besagte Wand von dem Ende des Druck-Kraft-Anzeigers (2) durch einen Abstand beabstandet ist, wobei der Abstand zwischen dem Ende von besagtem Druck-Kraft-Anzeiger (2) und besagter hülsenförmiger Vorrichtung (8,15) und der Wand, welche damit verbunden ist, besagtes Verbindungsstück (10,14) bestehend aus einem rückstellfähigen Material einschließen.

3. Eine Wägevorrichtung nach Anspruch 2, **dadurch gekennzeichnet, dass** ein Anhang an der Endseite des Druck-Kraft-Anzeigers (2) montiert ist, besagter Anhang sich in besagtes Verbindungsstück (14) erstreckt und sich in die Richtung der Wand verjüngt, welche die hülsenförmige Vorrichtung (15) verschließt.

4. Eine Wägevorrichtung nach Anspruch 1, **dadurch gekennzeichnet, dass** eine Buchse (12), welche ein Teil zum Stützen einer Stützfläche (5) ausbildet, an der Oberseite an einem Ende eines Druck-Kraft-Anzeigers (2) montiert ist, besagte Buchse durch eine ihr gegenüber beabstandete hülsenförmige Vorrichtung umschlossen ist, besagte hülsenförmige Vorrichtung an ihrem oberen Ende durch eine Wand (9) verschlossen ist, welche die Stützfläche (7) stützt, besagte Wand vom oberen Ende besagter Hülse (12) durch einen Abstand beabstandet ist, wobei der Raum zwischen der Buchse (12), besagter hülsenförmiger Vorrichtung (8) und der Wand (9), welche besagte hülsenförmige Vorrichtung an einem Ende verschließt, durch besagtes Verbindungsstück (10), bestehend aus einem rückstellfähigen Material, gefüllt ist, wobei wenigstens ein sich vertikal erstreckendes Teil des besagten Verbindungsstücks (10) zwischen den starren Teilen (9,2;8,12;13,16) eingeschlossen ist, welche starr mit besagten, die Stützflächen stützenden Teilen verbunden sind.

## Revendications

1. Appareil de pesée de charges, l'appareil de pesée comprenant au moins un indicateur (2) d'une force de pression qui est raccordé à un châssis (1), et un châssis auxiliaire (8, 15) sur lequel est placée la charge à peser, dans lequel un dispositif de transmission d'une force de pression (6, 18) destiné à transmettre des forces en direction pratiquement verticale est placé entre l'indicateur (2) de force de pression et le châssis auxiliaire (8, 15), ce dispositif de transmission de force de pression étant confiné entre deux surfaces de support (5, 7) dont l'une est raccordée à l'indicateur (2) de force de pression et l'autre est raccordée au châssis auxiliaire (8, 15), les parties (8, 2) du dispositif de pesée qui supportent les surfaces de support étant interconnectées par une pièce de raccordement (10, 14) constituée d'un matériau élastique, **caractérisé en ce qu'**une partie au moins de la pièce de raccordement s'étendant en direction pratiquement verticale est confinée entre un élément rigide (12, 13) raccordé à l'indicateur (2) de force de pression et un élément rigide (8) raccordé au châssis auxiliaire, afin que les forces appliquées en direction autre qu'une direction verticale descendante soient transmises à l'indicateur de force de pression par l'intermédiaire de la pièce élastique confinée de raccordement (10).

2. Dispositif de pesée selon la revendication 1, **caractérisé en ce qu'**une première extrémité de l'indicateur (2) de force de pression est entourée d'un dispositif (8, 15) en forme de manchon qui entoure l'extrémité à distance de celle-ci, et le dispositif en forme de manchon est fermé à une première extrémité, par une paroi (9, 16), cette paroi étant séparée de l'extrémité de l'indicateur (2) de force de pression par une certaine distance, si bien que l'espace compris entre l'extrémité de l'indicateur (2) de force de pression et le dispositif (8, 15) en forme de manchon et la paroi qui lui est raccordée loge la pièce de raccordement (10, 14) constituée d'un matériau élastique.

3. Dispositif de pesée selon la revendication 2, **caractérisé en ce qu'**une fixation est montée à l'extrémité de l'indicateur (2) de force de pression, cette fixation s'étendant dans la pièce de raccordement (14) et ayant une dimension qui diminue dans la direction de la paroi fermant le dispositif (15) en forme de manchon.

4. Dispositif de pesée selon la revendication 1, **caractérisé en ce qu'**un coussinet (12) formant une partie de support d'une surface de support (5) est monté à la partie supérieure d'une première extrémité d'un indicateur (2) de force de pression, le coussinet étant entouré à distance par le dispositif en forme de manchon, le dispositif en forme de manchon étant fermé à son extrémité supérieure par une paroi (9) de support d'une surface de support (7), la paroi étant séparée de l'extrémité supérieure du coussinet (12) par une certaine distance, si bien que l'espace compris entre le coussinet (12), le dispositif en forme de manchon (8) et la paroi (9) fermant le dispositif en forme de manchon à une première extrémité est rempli par la pièce de raccordement (10) constituée d'un matériau élastique, et qu'une partie au moins de la pièce de raccordement (10) qui s'étend verticalement est confinée entre des organes rigides (9, 2 ; 8, 12 ; 13, 16) qui sont raccordés de manière fixe auxdites parties qui supportent les surfaces de support.
